(19) Europäisches Patentamt

European Patent Office

Office européen des brevets

(11) **EP 4 549 895 A1**

(12) # EUROPEAN PATENT APPLICATION

(43) Date of publication:
**07.05.2025 Bulletin 2025/19**

(21) Application number: **23206905.4**

(22) Date of filing: **31.10.2023**

(51) International Patent Classification (IPC):
**G01J 5/02** (2022.01)   **G01J 5/12** (2006.01)
**G01J 1/02** (2006.01)

(52) Cooperative Patent Classification (CPC):
**G01J 5/12; G01J 5/026;** G01J 2005/123;
G01J 2005/126

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Melexis Technologies NV
3980 Tessenderlo (BE)**

(72) Inventors:
• **Bonev, Nikolay**
  **1138 Sofia (BG)**

• **Pangev, Atanas**
  **1138 Sofia (BG)**
• **Kassovski, Viktor**
  **1138 Sofia (BG)**
• **Buydens, Luc**
  **3980 Tessenderlo (BE)**

(74) Representative: **Kay, Ross Marcel
  Laudens
  Blackwell House
  Guildhall Yard
  London EC2V 5AE (GB)**

(54) **THERMAL SENSOR ARRAY DEVICE, METHOD OF MEASURING A TEMPERATURE GRADIENT AND METHOD OF MEASURING A TEMPERATURE**

(57)    A thermal sensor array device (100) comprises a substrate having a cavity (291) formed therein. An infrared absorbing membrane (200) is suspended over the cavity from a first and second beams (202, 206), the first beam (202) being thermally coupled at one end thereof to the substrate (Cj1) at a first cold junction and the second beam (206) being thermally coupled at one end thereof to a second substrate cold junction (Cj2). Thermocouples are disposed over the first and second beams (202, 206) and on the membrane (200). The thermocouples are arranged on the first and second beams (202, 206) and the membrane (200) as first and second thermopiles (300, 320). The first and second thermopiles (300, 320) are arranged on the membrane (200) to measure a sum of first temperature differentials between the first substrate cold junction (Cj1) and a hot junction (Hj) on the membrane (200), and second temperature differentials between the second substrate cold junction (Cj2) and the hot junction (Hj) on the membrane. The first thermopile (300) is configured to connect selectively to the second thermopile (320) in series and anti-series.

FIG. 2

EP 4 549 895 A1

## Description

The present invention relates to a thermal sensor device of the type that, for example, comprises infrared absorbing membrane suspended over a cavity in a substrate. The present invention also relates to a method of measuring a temperature gradient, the method being of the type that measures a temperature gradient across an infrared absorbing membrane of a thermal sensor device. The present invention also relates to a method of measuring a temperature, the method being of the type that, for example, employs a measurement of a temperature gradient across a thermal sensor device.

In the field of thermal sensors, it is known to employ thermal sensor devices to measure temperatures and/or provide images of remote objects in a scene from light emitted from a target object in the infrared range of the electromagnetic spectrum. A thermal sensor device typically comprises an array, for example arranged as a grid, of sensor pixels, each individually responsive to infrared electromagnetic radiation.

The pixels of an array of such sensor devices, in practice, suffer from variations in response between sensor pixels, despite being exposed to the same amount of infrared radiation. Consequently, it is known for infrared cameras employing such sensor devices to apply a correction to raw output signals from the array. For example, a known correction technique comprises generating a table of individual correction factors to be applied to the respective outputs of each pixel of an image. However, it is known that additional variations in the outputs of sensor pixels of the array can occur where local heating takes place within the sensor device as a result of normal operation of the sensor device. Such so-called local hotspots can affect the response of one or more sensor pixels of the array. Similarly, external heat sources adjacent the sensor device, but not part of the scene, can result in temperature variations across the array. When the array is exposed to such sources of heat, linear and non-linear temperature gradients occur across the array. Such temperature gradients lead to inconsistent and/or inaccurate measurement results.

The skilled person will appreciate that a temperature gradient extending across the pixels of an array of sensor devices results in pixels across the array being heated to different temperatures. As such, even before exposure to an infrared source or sources in a scene to be measured, the pixels are already biased by the temperatures to which they are respectively already exposed in their environment, which can be local and proximal or within the wider scene. For example, when packaged, the local proximal environment is contained by, for example, a cap, and this local proximal environment contains thermal energy that can influence measurements made by the pixels. Thermal energy transfer between the individual local proximal environments and the respective pixels, can lead to the pixels of the sensor device being heated to different temperatures. Exterior to the device package, one or more heat-radiating objects in the vicinity of the sensor device, but not the subject of measurements to be made, can "pre-heat" a number of the pixels of the sensor device such that different pixels will provide different temperature measurements in respect of the same object to be measured. This can arise as a result in variations in thermal resistance within the environment and/or the location of the unwanted sources of heat. European patent no. 3 118 594 B1 describes the arrangement of a combination of active and so-called "blind" pixels in predetermined patterns in order to obviate the above-described effects of temperature gradients. German patent publication number DE 10 2004027393 A1 describes the disposal of multiple thermocouples in a predetermined manner on a sensor membrane in order to compensate for temperature gradients. However, the arrangement described employs hot and cold junctions symmetrically arranged, which is not always possible owing to space limitations. In such circumstances, unwanted sensor responses to temperature gradients increase. Also, the arrangement described does not enable accurate identification of a location of an unwanted heat source.

It is also known to provide additional thermocouples accompanying an array of thermal sensor devices and to use an interpolation technique to determine a temperature gradient across the array of device.

According to a first aspect of the present invention, there is provided a thermal sensor element device comprising: a substrate having a cavity formed therein; and an infrared absorbing membrane suspended over the cavity from a first beam and a second beam, the first beam being thermally coupled at one end thereof to the substrate at a first substrate cold junction and the second beam being thermally coupled at one end thereof to the substrate at a second substrate cold junction; and a plurality of thermocouples disposed over the first and second beams and the infrared absorbing membrane; wherein the plurality of thermocouples is arranged on the first and second beams and the infrared absorbing membrane as a first thermopile and a second thermopile; the first and second thermopiles are arranged on the infrared absorbing membrane to measure, when in use, a sum of first temperature differentials and second temperature differentials, the first temperature differentials being between the first substrate cold junction and a hot junction on the infrared absorbing membrane, and the second temperature differentials being between the second substrate cold junction and the hot junction on the infrared absorbing membrane; and the first thermopile is configured to connect selectively to the second thermopile in series and anti-series.

The infrared absorbing membrane may comprise hot junctions of the plurality of thermocouples.

Each of the first thermopile and the second thermopile may be respectively configured to measure, when in use, a summation of temperature differentials in respect of a first region of the infrared absorbing membrane and a second region of the infrared absorbing membrane.

A number of the hot junctions and a number of cold junctions of the plurality of thermocouples may be configured so as to provide the first thermopile between the plurality of hot junctions and the number of cold junctions; another number of the hot junctions and another number of cold junctions of the plurality of thermocouples may be configured so as to provide the second thermopile between the plurality of hot junctions and the another number of cold junctions; at least one of the number of cold junctions may be located at a first end of the first beam distal from the infrared absorbing membrane; and at least one of the another number of cold junctions may be located at a second end of the second beam distal from the infrared absorbing membrane.

The summation of the first and second temperature differentials may be measured between the number of cold junctions and the number of hot junctions.

At least a portion of each of the hot junctions may be configured to converge within a predetermined hot end region of the infrared absorbing membrane.

The hot junctions of the thermocouples may comprise interconnections in the predetermined hot end region of the infrared absorbing membrane.

The first beam may comprise a narrow track portion that extends towards the infrared absorbing membrane and integrally forms a portion of the infrared absorbing membrane; and the second beam may comprise a narrow track portion that extends towards the infrared absorbing membrane and integrally forms another portion of the infrared absorbing membrane.

Neighbouring thermocouples of the first thermopile may be separated by a number of separating channels narrower than the thermocouples.

The plurality of thermocouples may be an even number of thermocouples.

The first beam may bridge the substrate and a first side of the infrared absorbing membrane; and the second beam may bridge the substrate and a second side of the infrared absorbing membrane.

A first number of thermocouples of the first thermopile between the hot junction on the infrared absorbing membrane and the at least one of the number of cold junctions of the first beam may be greater than a second number of thermocouples of the first thermopile between the hot junction on infrared absorbing membrane and the at least one of the another number of cold junctions of the second beam.

A first number of thermocouples of the second thermopile between the hot junction on the infrared absorbing membrane and the at least one of the another number of cold junctions of the second beam may be greater than a second number of thermocouples of the second thermopile between the hot junction on the infrared absorbing membrane and the at least one of the number of cold junctions of the first beam.

According to a second aspect of the present invention, there is provided a thermal sensor array device comprising the thermal sensor element device as set forth above in relation to the first aspect of the invention.

According to a third aspect of the present invention, there is provided a method of measuring a temperature gradient over a thermal sensor device of an array of thermal sensor devices, the method comprising: providing an array of thermal sensor devices comprising the thermal sensor device as set forth above in relation to the first aspect of the invention; receiving infrared electromagnetic radiation incident upon the thermal sensor device; connecting the first thermopile to the second thermopile in anti-series; measuring a difference value in respect of the received infrared electromagnetic radiation constituting the temperature gradient; and storing the temperature gradient measured.

According to a fourth aspect of the present invention, there is provided a method of measuring a temperature, the method comprising: measuring the temperature gradient as set forth above in relation to the third aspect of the invention; connecting the first thermopile to the second thermopile in series; measuring a summation value in respect of the received infrared electromagnetic radiation; and calculating a temperature by using the temperature gradient to compensate the summation value.

It is thus possible to provide a thermal sensor device and a method of measuring a temperature gradient across an infrared absorbing membrane that provides more accurate measurement of infrared electromagnetic radiation incident upon the thermal sensor elements of an array of thermal sensor elements. The device and method enables the same thermal sensor device that measure infrared electromagnetic radiation to be used to measure a temperature gradient across itself. When used for calibration purposes, it is possible to measure the distribution of temperatures over the array of sensor element with greater precision than employing additional thermocouples and a simple interpolation technique. A delta temperature measurement function between cold junctions can be used to compensate for changes in temperature gradient when gas conductivity is constant within the cap of the sensor device. In this regard, changes in gradient can occur, for example when a power dissipation floor plan, the power values of thermal energy sources across the space of the integrated circuit comprising the sensor device, changes or changes occur in relation to the manner in which the die is attached to a leadframe, for example a jointing agent used cracks, delaminates or the properties thereof change. Additionally, during production the method and device allow the verification that jointing agent used to attach the die to the leadframe has been applied reliably during assembly. During operation of the sensor device, measurements according to the method can be performed in order to check for internal and external thermal influences that can be the cause of temperature gradients across the array of sensor devices. Such measured temperature gradients can be used to determine degradation in the performance and/or drift of the thermal sensor devices and/or the package of the array of sensor devices. The measurement of temperature gradients can also be used to determine whether excessively strong heat sources are disposed too close to the sensor device within the scene such that measurements made would be influenced detrimentally. In conjunction with the setting of a maximum permitted temperature gradient, a user can be provided with an indication as to whether a measurement can be trusted and thus a sensor comprising the sensor devices provides greater confidence in its use for critical applications. The sensor device and method also provide the ability to use the sensor device to make measurements directly at startup of the sensor device rather than having to wait for the sensor device to reach a thermally stable state. Thus, the sensor device can be used during short intervals without having to wait for thermal stability of the sensor device to be reached and the sensor device can remain unpowered when not in use. Support for this manner of use is beneficial particularly, but not exclusively, for battery operated applications where it is desirable to minimise power consumption.

At least one embodiment of the invention will now be described, by way of example only, with reference to the accompanying drawings, in which:

**Figure 1** is a schematic diagram of a thermal sensor device comprising an array of thermal sensor elements and constituting an embodiment of the invention;

**Figure 2** is a schematic diagram of a thermal sensor element of the thermal sensor array device of Figure 1;

**Figure** 3 is a circuit diagram of thermocouples of the thermal sensor element of Figure 2;

**Figure 4** is a flow diagram of a method of measuring a temperature gradient;

**Figure 5** is a schematic diagram of neighbouring thermal sensor elements of Figure 1;

**Figure 6** is a flow diagram of a method of measuring a temperature and compensating the measured temperature using a temperature gradient calculated in accordance with the method of Figure 4; and

**Figure 7** is a cross-sectional view of the thermal sensor element of Figure 2 along the line A-A.

Throughout the following description, identical reference numerals will be used to identify like parts.

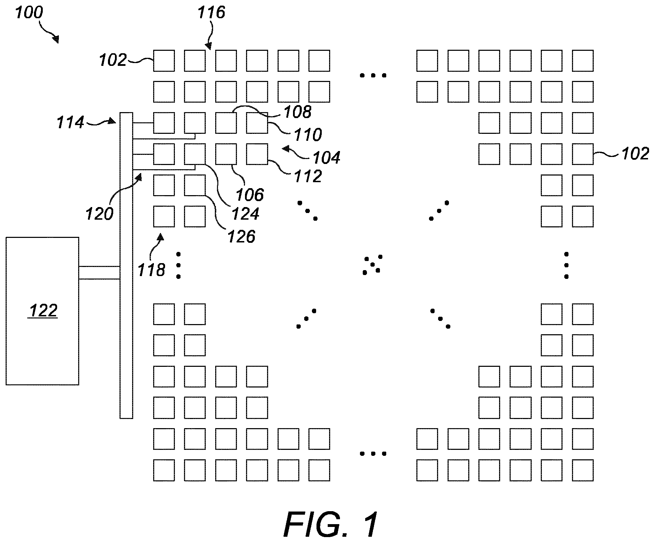

Referring to Figure 1, a thermal sensor array device 100 comprises a plurality of thermal sensor elements or devices 102. The plurality of thermal sensor elements 102 is arranged as an n x m array of pixels. A first 2 x2 cluster 104 of sensor devices comprises a first thermal sensor element or device 106, a second thermal sensor element or device 108, a third thermal sensor element or device 110 and a fourth thermal sensor element or device 112. A second, neighbouring cluster 114 is spaced from the first cluster 104 by a first channel 116, and a third, neighbouring, cluster 118 is spaced from the second cluster 114 by a second channel 120. Of course, the skilled person will appreciate that although the plurality of thermal sensor elements 102 is arranged as clusters of thermal sensor elements, other arrangements are conceivable depending upon the precise manufacturing process employed.

Each sensor element of the plurality of thermal sensor elements 102 is operably coupled to a measurement circuit 122. Although a single signal line is shown between sensor elements and the measurement circuit 122, the skilled person should appreciate that multiple connections exist between the measurement circuit and each thermal sensor element as will be described below and single lines are shown for the sake of simplicity and clarity.

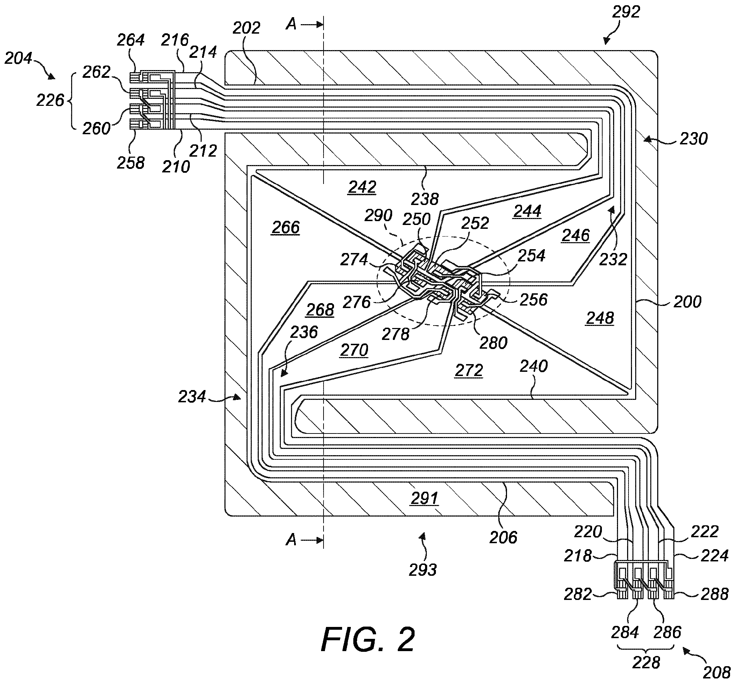

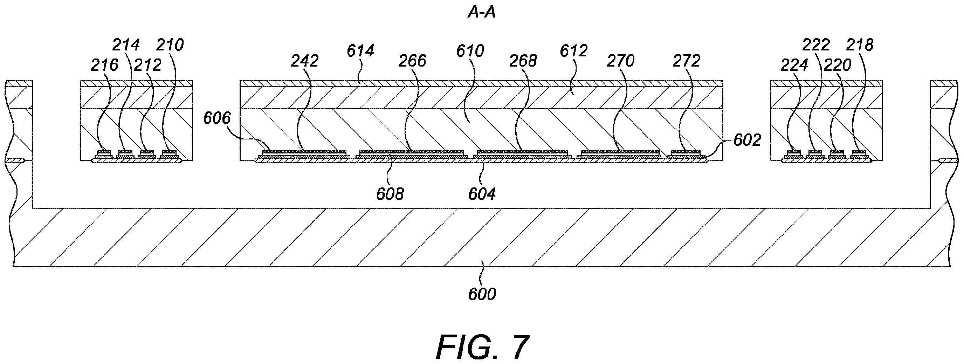

Turning to Figures 2 and 7, the first, second, third and fourth thermal sensor elements 106, 108, 110, 112, as indeed the other thermal sensor elements of the plurality of thermal sensor elements 102 of the array of pixels, are of a like construction and so for the sake of clarity and conciseness of description, the structure of the first thermal sensor element 106 will only be described. However, the skilled person will appreciate that the structure of the first thermal sensor element 106 is applicable to the other thermal sensor elements of the plurality of thermal sensor elements 102.

The first thermal sensor element 106 employs any suitable mechanical support structure known in the art. For example, the first thermal sensor element 106 comprises a substrate 600 constituting a so-called "bulk" layer of material, for example silicon. A relatively thin, shaped, structure known as a membrane or diaphragm 200 is formed over the bulk material and connected to the substrate via beams 202, 206. The beams constitute narrow track portions that extend from a region of the substrate associated with the thermal sensor element 106 to the membrane 200, in this example the narrow track portions extend from two opposite sides of the region of the substrate associated with the thermal sensor element 106 and meet the membrane 200 at opposite sides thereof. A portion of the substrate beneath the membrane 200 has been removed, for example by any suitable known etching technique so as form a cavity 291 beneath the membrane 200 and the beams 202, 206. A cap structure (not shown), formed from a material that is infrared-transmissive, is mounted over the substrate 600 so that the membrane 200 and the beams 202, 206 are encapsulated within a closed cavity (not shown) that is usually hermetically sealed. The pressure within the cavity, and the gas composition inside the cavity, are largely determined by the specific technique employed to seal the substrate 600 to the cap structure. Most of the cap structure is covered by a layer of non-transparent material, except for an opening to serve as an aperture or window through which infrared electromagnetic radiation is permitted to propagate.

In this example, as mentioned above, the beams 202, 206 are provided between opposite sides 292, 293 of the membrane 200 and the substrate 600, and are arranged as a first beam 202 at a first side 204 of the substrate 600 adjacent the cavity 291 and a second beam 206 at a second side 208 of the substrate 600 adjacent the cavity 291. In this example, the first beam 202 comprises a first thermocouple 210, a second thermocouple 212, a third thermocouple 214 and a fourth thermocouple 216. The second beam 206 comprises a fifth thermocouple 218, a sixth thermocouple 220, a seventh thermocouple 222 and an eighth thermocouple 224. In this example, multiple thermocouples share a common beam, but in other examples other distributions are possible, for example a dedicated beam for one or more thermocouples. A first end 226 of the first, second, third and fourth thermocouples 210, 212, 214, 216 are thermally coupled to a first region of the substrate (not shown) and a first end 228 of the fifth, sixth, seventh and eighth thermocouples 218, 220, 222, 224 are thermally coupled to a second region of the substrate (not shown). The first and second regions of the substrate are spaced apart and, in this example, located opposite each other, the membrane 200 being located between the first and second regions of the substrate. A second end 230 of the first beam 202 is integrally formed with the membrane 200 at a first connecting side 232 thereof. A second end 234 of the second beam 206 is integrally formed with the membrane 200 at a second connecting side 236 thereof. In this example, the first and second connecting sides 232, 236 of the membrane 200 are diagonally opposite each other.

In this example, the membrane 200 is of a largely rectangular shape. The membrane 200 has a first long side 238 and a second long side 240. The first beam 202 extends substantially parallel with, and adjacent, the first long side 238 and the second beam 206 extends substantially parallel with, and adjacent, the second long side 240.

The purpose of the first and second beam 202, 206 and the membrane 200 is to carry the plurality of thermocouples described above, which in this example is arranged as a first thermopile and a second thermopile. In this example, the number of thermocouples of the plurality of thermocouples is an even number. The plurality of thermocouples is formed from a first deposition of p-type semiconductor 602, for example p-type polysilicon, on a layer of field oxide 604 and separated from a second deposition of an n-type semiconductor 606, for example n-type polysilicon, by a thin oxide layer 608. A dielectric oxide layer 610 is formed over the n-type polysilicon 606 and a layer of passivation oxide 612 is formed over the dielectric oxide layer 610. Silicon nitride 614 is then disposed over the layer of passivation oxide 612. The structure will hereafter be referred to as an p-n polysilicon layer stack. The p-type and n-type polysilicon layers 602, 606, the oxide layers 604, 608, 610, 612 and the silicon nitride layer 614 are patterned using any suitable lithographic technique in order to shape the depositions and expose small regions of the p-type and n-type polysilicon layer 602, 606 deposited so as to permit interconnection of the layers of p-type and n-type polysilicon 602, 606. Such points of interconnection permit thermocouples to be formed and multiple thermocouples to be connected together to form thermopiles. The layers of p- and n-type polysilicon, 602, 606, the oxide layers 604, 608, 610, 612 and the silicon nitride 614 overlie the first and second beams 202, 206 and the membrane 200. The p- and n-type polysilicon is deposited so that the surface of the membrane 200 is covered with shaped sections of n-type polysilicon substantially overlying respective sections of p-type polysilicon (with the thin dielectric oxide layer 608 in-between) whilst adding small amounts of the dielectric oxide 610 to insulate the p-n polysilicon layer stack at either side of each shaped section to form multiple neighbouring polysilicon layer stacks. The channels separating neighbouring p-n polysilicon layer stacks of the p-n polysilicon layer stacks are narrower than the p-n polysilicon layer stacks. A first, second, third, fourth, fifth, sixth, seventh, and eighth p-n polysilicon layer stacks are thus provided.

In this regard, a plurality of p-n polysilicon layer stacks are provided as follows. A first p-n polysilicon layer stack is provided as the first thermocouple 210 and extends over a first region 242 of the membrane 200. Similarly, second, third and fourth p-n polysilicon layer stacks respectively extend over the first beam 202, constituting second, third and fourth thermocouples 212, 214, 216 respectively extending to a second, third, and fourth region 244, 246, 248 of the membrane 200. For each of the first, second, third and fourth p-n polysilicon layer stacks, the n-type polysilicon layer does not entirely cover the p-type polysilicon layer and first, second, third and fourth small membrane contact zones 250, 252, 254, 256 of the p-type polysilicon layer are left uncovered by the respective n-type polysilicon layer. Similarly, the n-type polysilicon layer of each of the first, second, third and fourth p-n polysilicon layer stacks does not entirely cover the p-type silicon layer at the first end 226 of the first, second, third and fourth thermocouples 210, 212, 214, 216 and so form first, second, third and fourth thermocouple contact zones 258, 260, 262, 264.

Fifth, sixth, seventh and eighth p-n polysilicon layer stacks are respectively provided as the fifth, sixth, seventh and eighth thermocouples 218, 220, 222, 224 and respectively extend to a fifth, sixth, seventh and eighth region 266, 268, 270, 272 of the membrane 200. For each of the fifth, sixth, seventh and eighth p-n polysilicon layer stacks, the n-type polysilicon layer does not entirely cover the p-type polysilicon layer and fifth, sixth, seventh and eighth small membrane contact zones 274, 276, 278, 280 of the p-type polysilicon are left uncovered by the n-type polysilicon layer. Likewise, the n-type polysilicon layer of each of the fifth, sixth, seventh and eighth p-n polysilicon layer stacks does not entirely cover the p-type polysilicon layer at the first end 228 of the fifth, sixth, seventh and eighth thermocouples 218, 220, 222, 224 and so form fifth, sixth, seventh and eighth thermocouple contact zones 282, 284, 286, 288.

The p-n polysilicon layer stacks overlying each of the first, second, third, fourth, fifth, sixth, seventh and eighth regions 242, 244, 246, 248, 266, 268, 270, 272 of the membrane 200 each comprise a respective peninsula region, the first, second, third, fourth, fifth, sixth, seventh and eighth membrane contact zones 250, 252, 254, 256, 274, 276, 278, 280 being respectively located at distal tips of the peninsula regions of the first, second, third, fourth, fifth, sixth, seventh and eighth regions 242, 244, 246, 248, 266, 268, 270, 272 of the membrane 200. In this example, the distal tips of the peninsula regions of the first, second, third, fourth, fifth, sixth, seventh and eighth regions 242, 244, 246, 248, 266, 268, 270, 272 of the membrane 200 converge towards a central region 290 of the membrane 200. Metallic interconnects are employed to couple layers of p-type polysilicon to layers of n-type polysilicon in a predetermined manner so as to provide the plurality of thermocouples within the central region 290. As such, the hot junctions, Hj, converge within the central region 290, which constitutes a hot end region. The predetermined manner of interconnection of the layers of p-type polysilicon and layers of n-type polysilicon interconnect the plurality of thermocouples independently as the first and second thermopiles.

In this example, the n-type polysilicon adjacent the fourth thermocouple contact zone 264 is operably coupled to the measurement circuit 122 (not shown in Figure 2). The n-type polysilicon of the fourth p-n polysilicon layer stack residing at the tip of the peninsula region of the fourth region 248 of the membrane 200 is coupled to the p-type polysilicon of the eighth membrane contact zone 280. The p-type polysilicon of the eighth p-n polysilicon layer stack at the eighth thermocouple contact zone 288 is coupled to the n-type polysilicon of the p-n polysilicon layer stack of the seventh thermocouple 222 at the first end 228. The n-type polysilicon at the tip of the peninsula region of the seventh p-n polysilicon layer stack deposited on the seventh region 270 of the membrane 200 is coupled to the p-type polysilicon of sixth p-n polysilicon layer stack at the sixth membrane contact zone 276. The p-type polysilicon of the sixth p-n polysilicon layer stack at the sixth thermocouple contact zone 284 is coupled to the n-type polysilicon of the fifth p-n polysilicon layer stack of the fifth thermocouple 218 at the first end 228. The n-type polysilicon at the tip of the peninsula region of the fifth p-n polysilicon layer stack deposited on the fifth region 266 of the membrane 200 is coupled to the p-type polysilicon of the seventh p-n polysilicon layer stack at the seventh membrane contact zone 278. The p-type polysilicon of the seventh p-n polysilicon layer stack at the seventh thermocouple contact zone 286 is coupled to the n-type polysilicon of the sixth p-n polysilicon layer stack of the sixth thermocouple 220 at the first end 228. The n-type polysilicon at the tip of the peninsula region of the sixth p-n polysilicon layer stack deposited on the sixth region 268 of the membrane 200 is coupled to the p-type polysilicon of the first p-n polysilicon layer stack at the first membrane contact zone 250. The p-type polysilicon of the first p-n polysilicon layer stack at the first thermocouple contact zone 258 is coupled to the measurement circuit 122. The above-described series of interconnections form a number of connected thermocouples, in this example four, which together form the first thermopile.

Additionally, the second thermopile is formed from the following interconnections. The n-type polysilicon of the third p-n polysilicon layer stack of the third thermocouple 214 at the first end 226 is operably coupled to the measurement circuit 122 (not shown in Figure 2). The n-type polysilicon of the third p-n polysilicon layer stack residing at the tip of the peninsula region of the third region 246 of the membrane 200 is coupled to the p-type polysilicon of the second membrane contact zone 252. The p-type polysilicon of the second p-n polysilicon layer stack at the second thermocouple contact zone 260 is coupled to the n-type polysilicon of first p-n polysilicon layer stack of the first thermocouple 210 at the first end 226. The n-type polysilicon of the first p-n polysilicon layer stack residing at the tip of the peninsula region of the first region 242 of the membrane 200 is coupled to the p-type polysilicon of the fifth membrane contact zone 274. The p-type polysilicon of the fifth p-n polysilicon layer stack at the fifth thermocouple contact zone 282 is coupled to the n-type polysilicon of the eighth p-n polysilicon layer stack of the eighth thermocouple 224 at the first end 228. The n-type polysilicon of the eighth p-n polysilicon layer stack residing at the tip of the peninsula region of the eighth region 272 of the membrane 200 is coupled to the p-type polysilicon of the third membrane contact zone 254. The p-type polysilicon of the third p-n polysilicon layer stack at the third thermocouple contact zone 262 is coupled to the n-type polysilicon of second p-n polysilicon layer stack of the second thermocouple 212 at the first end 226. The n-type polysilicon of the second p-n polysilicon layer stack residing at the tip of the peninsula region of the second region 244 of the membrane 200 is coupled to the p-type polysilicon of the fourth membrane contact zone 256, the p-type polysilicon of the fourth p-n polysilicon layer stack at the fourth thermocouple contact zone 264 being coupled to the measurement circuit 122.

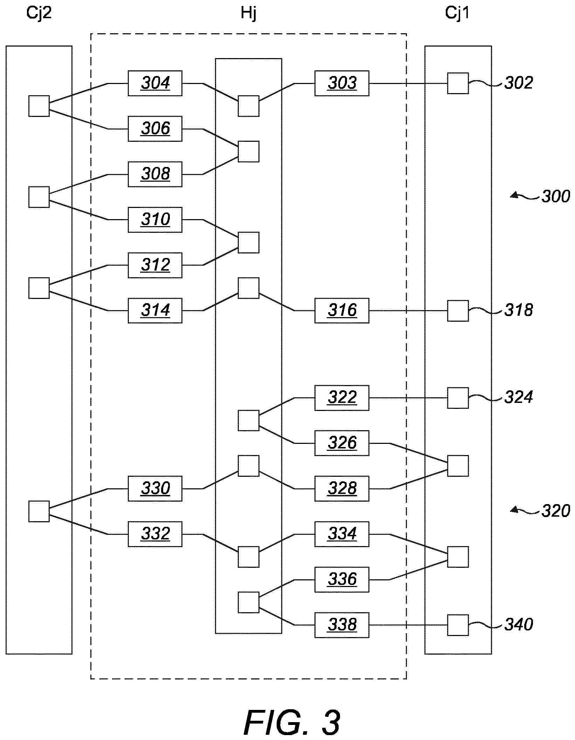

Referring to Figure 3, and treating the p-type and n-type polysilicon layers of the p-n polysilicon layer stacks as circuit components, the first thermopile 300 comprises a first end of the n-type polysilicon layer 303 of the fourth p-n polysilicon layer stack coupled to the measurement circuit 122 via a first terminal 302, a second end of the n-type polysilicon layer 303 of the fourth p-n polysilicon layer stack being coupled to a first end of the p-type polysilicon layer 304 of the eighth p-n polysilicon layer stack. A second end of the p-type polysilicon layer 304 of the eighth p-n polysilicon layer stack is coupled to a first end of the n-type polysilicon layer 306 of the seventh p-n polysilicon layer stack, a second end of the n-type polysilicon layer 306 of the seventh p-n polysilicon layer stack being coupled to a first end of the p-type polysilicon layer 308 of the sixth p-n polysilicon layer stack. A second end of the p-type polysilicon layer 308 of the sixth p-n polysilicon layer stack is coupled to a first end of the n-type polysilicon layer 310 of the fifth p-n polysilicon layer stack, a second end of the n-type polysilicon layer 310 of the fifth p-n polysilicon layer stack being coupled to a first end of the p-type polysilicon layer 312 of the seventh p-n polysilicon layer stack. A second end of the p-type polysilicon layer 312 of the seventh p-n polysilicon layer stack is coupled to a first end of the n-type polysilicon layer 314 of the sixth p-n polysilicon layer stack, a second end of the n-type polysilicon layer 314 of the sixth p-n polysilicon layer stack being coupled to a first end of the p-type polysilicon layer 316 of the first p-n polysilicon layer stack. A second end of the p-type polysilicon layer 316 of the first p-n polysilicon layer stack is coupled to the measurement circuit 122 via a second terminal 318.

The second thermopile 320 comprises a first end of the n-type polysilicon layer 322 of the third p-n polysilicon layer stack coupled to the measurement circuit 122 via a third terminal 324, a second end of the n-type polysilicon layer 322 of the third p-n polysilicon layer stack being coupled to a first end of the p-type polysilicon layer 326 of the second p-n polysilicon layer stack. A second end of the p-type polysilicon layer 326 of the second p-n polysilicon layer stack is coupled to a first end of the n-type polysilicon layer 328 of the first p-n polysilicon layer stack, a second end of the n-type polysilicon layer 328 of the first p-n polysilicon layer stack being coupled to a first end of the p-type polysilicon layer 330 of the fifth p-n polysilicon layer stack. A second end of the p-type polysilicon layer 330 of the fifth p-n polysilicon layer stack is coupled to a first end of the n-type polysilicon layer 332 of the eighth p-n polysilicon layer stack, a second end of the n-type polysilicon layer 332 of the eighth p-n polysilicon layer stack being coupled to a first end of the p-type polysilicon layer 334 of the third p-n polysilicon layer stack. A second end of the p-type polysilicon layer 334 of the third p-n polysilicon layer stack is coupled to a first end of the n-type polysilicon layer 336 of the second p-n polysilicon layer stack, a second end of the n-type polysilicon layer 336 of the second p-n polysilicon layer stack being coupled to a first end of the p-type polysilicon layer 338 of the fourth p-n polysilicon layer stack. A second end of the p-type polysilicon layer 338 of the fourth p-n polysilicon layer stack is coupled to the measurement circuit 122 via a fourth terminal 340.

As can be seen from Figure 3, the number of thermocouple elements (p-type or n-type polysilicon layers) of the first thermopile 300, between the hot junctions, Hj, and the second cold junctions, Cj2, is greater than the number of thermocouple elements of the first thermopile 300 between the hot junctions, Hj, and the first cold junctions, Cj1. Similarly, the number of thermocouple elements of the second thermopile 320, between the hot junctions, Hj, and the first cold junctions, Cj1, is greater than the number of thermocouple elements of the second thermopile 320 between the hot junctions, Hj, and the second cold junctions, Cj2.

The measurement circuit 122 is configured, in this example, to connect selectively the second terminal 318 to the third terminal 324 and measure a summation voltage across the first and fourth terminals 302, 340, or to connect the second terminal 318 to the fourth terminal 340 and measure a difference voltage across the first and third terminals 302, 324. The connection of the second terminal 318 to the third terminal 324 connects the first thermopile 300 to the second thermopile 320 in series. The connection of the second terminal 318 to the fourth terminal 340 connects the first thermopile 300 to the second thermopile 320 in what is known as "anti-series" or "reverse series", in which the connection of the second thermopile 320 to the first thermopile 300 is such that the polarity of the second thermopile 320 is opposite to the polarity of the first thermopile 300.

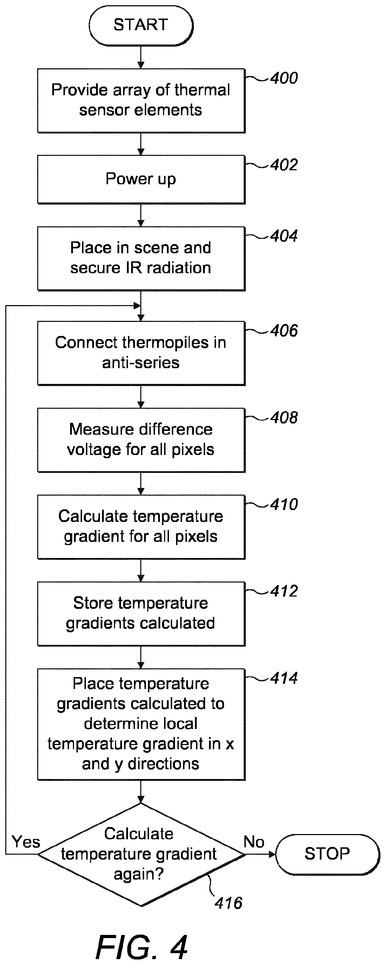

In operation (Figure 4), the first end 226 of the first, second, third and fourth thermocouples 210, 212, 214, 216 and the first end 228 of the fifth, sixth, seventh and eighth beams 218, 220, 222, 224, which are all in thermal contact with the substrate, constitute first cold junctions, Cj1, and second cold junctions, Cj2, respectively. The central region 290 of the membrane 200 where junctions are formed constitutes hot junctions, Hj. Individually, the thermocouple elements 304, 306, 308, 310, 312, 314 of the first thermopile 300 are arranged on the membrane 200 and the second beam 206 for measuring a temperature differential between the second cold junctions, Cj2, and the hot junctions, Hj, and the thermocouple elements 303, 316 of the first thermopile 300 are arranged on the membrane 200 and the first beam 202 for measuring a temperature differential between the first cold junctions, Cj1, and the hot junctions, Hj. The thermocouple elements 322, 326, 328, 334, 336, 338 of the second thermopile 320 are arranged on the membrane 200 and the first beam 202 for measuring a temperature differential between the first cold junctions, Cj1, and the hot junctions, Hj, and the thermocouple elements 330, 332 of the second thermopile 320 are arranged on the membrane 200 and the second beam 206 for measuring a temperature differential between the second cold junctions, Cj2, and the hot junctions, Hj. As such, the first and second thermopiles 300, 320 are configured to measure a sum of first temperature differentials and second temperature differentials, the first temperature differentials being between the first cold junctions, Cj1, and the hot junctions, Hj, on the membrane 200, and the second temperature differentials being between the second cold junctions, Cj2, and the hot junctions, Hj, on the membrane 200.

Having provided (Step 400) the plurality of thermal sensor elements 102 as the array of pixels in the manner set forth above, for example, a method of measuring a temperature gradient over a thermal sensor element, for example the first thermal sensor element 106 of the thermal sensor array device 100, comprises powering up (Step 402) the thermal sensor array device 100 and exposing the thermal sensor array device 100 to a source of infrared electromagnetic radiation in a scene. Infrared electromagnetic radiation is therefore received (Step 404) by one or more of the plurality of thermal sensor elements 102, for example the first thermal sensor element 106.

In order to measure the temperature gradient across the first thermal sensor element 106, the first thermopile 300 is coupled (Step 406) to the second thermopile 320 in anti-series by the measurement circuit 122 and the measurement circuit 122 measures (Step 408) the voltage across the first terminal 302 and the third terminal 324 of the first and second thermopiles 300, 320, respectively, thereby measuring a voltage difference across the anti-series circuit of thermocouples. The measurement circuit then calculates (Step 410) the temperature gradient across the first and second cold junctions, Cj1, Cj2, using the measured voltage difference. The temperature gradient measured is then stored (Step 412) by the measurement circuit 122.

It should be noted that the first and the second thermopiles 300, 320 have spatial asymmetry in order to measure a voltage difference proportional to a temperature differential between the cold junctions when the first and second thermopiles 300, 320 are connected in anti-series, because the spatial asymmetry ensures that a voltage difference is generated when the anti-series connection and a temperature gradient are present. The sensor element layout ensures that voltage difference signals are not falsely generated when no temperature gradient is present.

The above measurement of the difference voltage is, in this example, performed for all thermal sensor elements of the array of pixels and temperature gradients in respect of all thermal senor elements are also calculated. This enables the measurement circuit 122 to process individual temperature gradients of neighbouring thermal sensor elements in order to calculate (Step 414) local temperature gradients in respect of the array of pixels in x and y directions as will be described below in further detail.

Firstly, though, the voltage difference, $V_\Delta$, measured in respect of a given thermal sensor element, for example the first thermal sensor element 106, is considered.

$$V_\Delta = V_{TPA} - V_{TPB}$$

$$= S\left(T_{hj} - T_{cj1}\right) + (n-1)S\left(T_{hj} - T_{cj2}\right) - (n-1)S\left(T_{hj} - T_{cj1}\right) - S\left(T_{hj} - T_{cj2}\right)$$

$$= -(n-2)S\left(T_{hj} - T_{cj1}\right) + (n-2)S\left(T_{hj} - T_{cj2}\right)$$

$$= (n-2)S\left(T_{hj} - T_{cj2} - T_{hj} + T_{cj1}\right)$$

$$= (n-2)S\left(T_{cj1} - T_{cj2}\right) \tag{1}$$

where $V_{TPA}$ is the voltage measured between the first terminal 302 and the second terminal 318, $V_{TPB}$ is the voltage measured between the third terminal 324 and the fourth terminal 340, S is the difference between the Seebeck coefficient of the n-type and p-type polysilicon layers, $T_{hj}$ is the temperature at the hot junctions, Hj, $T_{cj1}$ is the temperature at the first cold junctions, Cj1, $T_{cj2}$ is the temperature at the second cold junctions, Cj2, and n is the number of thermocouples per beam.

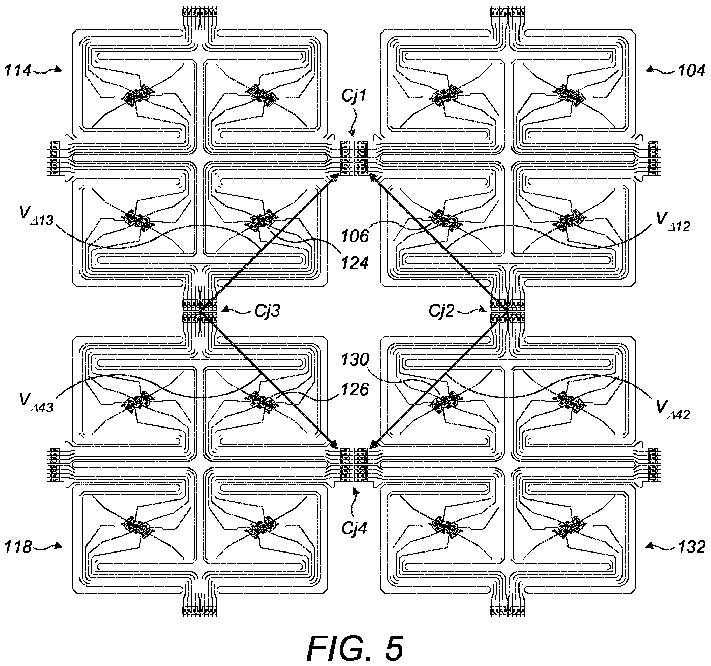

The above calculation is used to calculate the voltage differences in respect of each thermal sensor element of the array of pixels as described above. In this regard, and referring to Figure 5, for the sake of clarity and conciseness of description, four exemplary thermal sensor elements will now be considered to illustrate the calculation of a local temperature gradient in x and y directions.

In this regard, the measurement circuit 122 calculates a first voltage difference, $V_{\Delta 12}$, in respect of the first thermal sensor element 106 from the first cluster 104, a second voltage difference, $V_{\Delta 13}$, in respect of a fifth thermal sensor element or device 124 from the second cluster 114, a third voltage difference, $V_{\Delta 43}$, in respect of a sixth thermal sensor element or device 126 from the third cluster 118, and a fourth voltage difference, $V_{\Delta 42}$, in respect of a seventh thermal sensor element or device 130 from a fourth cluster 132. The cold junctions of both the first and fifth thermal sensor elements 106, 124 adjacent the first channel 116 are at same temperature, therefore considered as one cold junction, the first cold junction, Cj1. The cold junctions of both the first and seventh thermal sensor elements 106, 130 adjacent the second channel 120 are at the same temperature, and so also can be considered as one cold junction, the second cold junction, Cj2. The cold junctions of both the fifth and sixth thermal sensor elements 124, 126 adjacent the second channel 120 are at the same temperature, and so can also be considered as one cold junction, the third cold junction, Cj3. The cold junctions of both the sixth and seventh thermal sensor elements 126, 130 adjacent the first channel 116 are at same temperature, and so can also be considered as one cold junction, the fourth cold junction, Cj4.

In order to calculate the temperature gradient in the x and y directions in respect of the first, second, third and fourth clusters, 104, 114, 118, 132, only the first, second, and fourth voltage differences, $V_{\Delta 12}$, $V_{\Delta 13}$, $V_{\Delta 42}$, are required. The first voltage difference, $V_{\Delta 12}$, is in respect of the temperature difference between the first and second cold junctions, Cj1, Cj2, the second voltage difference, $V_{\Delta 13}$, is in respect of the temperature difference between the first and third cold junctions, Cj1, Cj3, and the fourth voltage difference, $V_{\Delta 42}$, is in respect of the temperature difference between the fourth and second cold junctions, Cj4, Cj2.

As set out above, the first voltage difference, $V_{\Delta 12}$, between the first and second cold junctions, Cj1, Cj2, is given by the following expression:

$$V_{\Delta 12} = (n - 2)S\left(T_{cj1} - T_{cj2}\right) \qquad (1)$$

Similarly, the second voltage difference, $V_{\Delta 13}$, between the first and third cold junctions, Cj1, Cj3, is given by the analogous equation:

$$V_{\Delta 13} = (n - 2)S\left(T_{cj1} - T_{cj3}\right) \qquad (2)$$

Also, the fourth voltage difference, $V_{\Delta 42}$, between the fourth and second cold junctions, Cj4, Cj2, is given by the analogous equation:

$$V_{\Delta 42} = (n - 2)S\left(T_{cj4} - T_{cj2}\right) \qquad (3)$$

Rearranging equation (1), it is possible to obtain an expression for the temperature difference between the first and second cold junctions, Cj1, Cj2:

$$T_{cj1} - T_{cj2} = \frac{V_{\Delta 12}}{(n - 2)S} \qquad (4)$$

Similarly, rearranging equations (2) and (3), expressions for the temperature differences between the first and third cold junctions, Cj1, Cj3, and between the fourth and second cold junctions, Cj4, Cj2, can be respectively obtained:

$$T_{cj1} - T_{cj3} = \frac{V_{\Delta 13}}{(n - 2)S} \qquad (5)$$

$$T_{cj4} - T_{cj2} = \frac{V_{\Delta 42}}{(n - 2)S} \qquad (6)$$

By calculating the difference in temperatures between the second and third cold junctions, Cj2, Cj3, it is possible to calculate the temperature gradient in the x direction, $\frac{\Delta T}{\Delta x}$ :

$$\frac{\Delta T}{\Delta x} = \frac{T_{cj2} - T_{cj3}}{\Delta x} = \frac{\left(T_{cj1} - T_{cj3}\right) - \left(T_{cj1} - T_{cj2}\right)}{\Delta x} = \frac{V_{\Delta 13} - V_{\Delta 12}}{\Delta x(n - 2)S} \qquad (7)$$

where $\Delta x$ is the distance between neighbouring clusters in the x-direction. In order to calculate the temperature gradient in the y direction, $\frac{\Delta T}{\Delta y}$ , similarly the difference in temperatures between the first and the fourth cold junctions, Cj1, Cj4, is calculated:

$$\frac{\Delta T}{\Delta y} = \frac{T_{cj1} - T_{cj4}}{\Delta y} = \frac{\left(T_{cj1} - T_{cj2}\right) - \left(T_{cj4} - T_{cj2}\right)}{\Delta y} = \frac{V_{\Delta 13} - V_{\Delta 42}}{\Delta y(n - 2)S} \qquad (8)$$

where $\Delta y$ is the distance between neighbouring clusters in the y-direction. The calculation in the x and y directions of the temperature gradient between clusters of thermal sensor elements enables an overall temperature gradient over the array of pixels to be calculated and stored.

The temperature gradients stored can be used for various applications, including offsetting temperature measurements made by individual thermal sensor element of the array of pixels. Once a map of local temperature gradients in respect of a set of clusters of thermal sensor elements has been generated, the measurement circuit 122 determines (Step 416) whether further temperature gradients need to be measured, and if required the above steps (Steps 406 to 414) are repeated, otherwise the process halts.

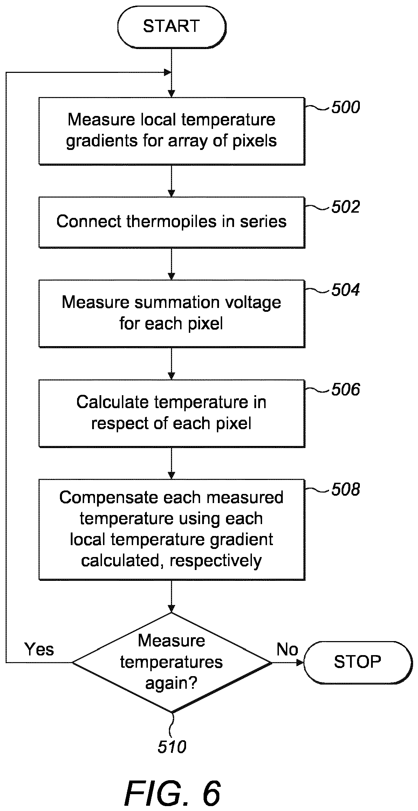

Referring to Figure 6, and taking the example of measuring temperatures of one or more objects in the scene, the measurement circuit 122 measures (Step 500) the local temperature gradients in the manner described above prior to measuring temperatures of objects in the scene. Once the map of temperature gradients has been generated, the measurement circuit 122 connects (Step 502) the first thermopile 300 to the second thermopile 320 in series by connecting the second terminal 318 to the third terminal 324.

Thereafter, the measurement circuit 122 measures (Step 504) a summation voltage, $V_\Sigma$, across the first and fourth terminals 302, 340. In respect of the first thermal sensor element 106, the summation voltage, $V_\Sigma$, relates to temperature as follows:

$$V_\Sigma = V_{TPA} + V_{TPB}$$
$$= S(T_{hj} - T_{cj1}) + (n-1)S(T_{hj} - T_{cj2}) + (n-1)S(T_{hj} - T_{cj1}) + S(T_{hj} - T_{cj2})$$
$$= nS(T_{hj} - T_{cj1}) + nS(T_{hj} - T_{cj2})$$
$$= 2nS(T_{hj} - T_{cj}) \tag{9}$$

where $T_{cj}$ is the average between the temperatures of the first and second cold junctions, $T_{cj1}$, $T_{cj2}$. Using the summation voltage, $V_\Sigma$, the measurement circuit 122 uses equation (9) to calculate (Step 506) the temperature corresponding to the infrared electromagnetic radiation received by the first thermal sensor element 106. This process is also performed in relation to the other thermal sensor elements of the plurality of thermal sensor elements 102.

Thereafter, the temperature measured by the first thermal sensor element 106 is compensated (Step 508) by the local temperature gradient calculated in respect of the cluster of pixels amongst which the first thermal sensor element 106 resides. For example, a fraction of the first voltage difference, $V_{\Delta 12}$, calculated in accordance with equation (1) is subtracted from the summation voltage, $V_\Sigma$, calculated in accordance with equation (9).

Compensated temperature measurements are also calculated in respect of other thermal sensor elements of the plurality of thermal sensor elements 102. If further temperature measurement is required (Step 510) of the thermal sensor array device 100, the above process (Steps 500 to 508) is repeated. Otherwise, the measurement process is halted.

In addition to using the local temperate gradients calculated in the process of measuring temperatures using the thermal sensor array device 100 "during application", for example when in use measuring temperatures of one or more objects in a scene, the measurement of the local temperature gradients can be performed as part of a calibration process for the thermal sensor array device 100 prior to use in respect of an application for the thermal sensor array device 100.

During operation, the measurement of the temperature gradients can be used to check for internal and external thermal influences that would generate the temperature gradients. In the event that a source external to the thermal sensor array device 100 is too strong, in another example, a maximum temperature gradient can be set in respect of the thermal sensor array device 100 and the thermal sensor array device 100 can be configured to provide a warning signal when the maximum temperature gradient has been exceeded in respect of one or more thermal sensor elements in order to indicate that temperature measurements by the array of pixels might be unreliable. Such monitoring of the temperature gradients can be performed upon startup of the thermal sensor array device 100 or periodically during in-field use. In one example implementation, temperature measurements made using the thermal sensor array device 100 can be deemed unreliable when adjacent thermal sensor elements, for example the first, second, fourth, fifth and/or seventh thermal sensor elements 106, 108, 112, 124 and 130 measure local gradients, such as voltage differences, that exceed a predetermined voltage difference or temperature gradient threshold set according to the compensation capabilities of the measurement circuit 122. In such circumstances, the warning signal can be provided using any suitable means, for example an audible alert or a message presented, such as, on a display of a temperature measurement device comprising the thermal sensor array device 100.

Although the above examples relate to a specific layout of pixels, the skilled person should appreciate that each cluster can comprise any number of individual thermal sensor elements. Additionally, although each cluster in the above examples is generally rectangular in shape, the clusters can be shaped differently.

## Claims

1. A thermal sensor element device comprising:

   a substrate having a cavity formed therein; and
   an infrared absorbing membrane suspended over the cavity from a first beam and a second beam, the first beam being thermally coupled at one end thereof to the substrate at a first substrate cold junction and the second beam being thermally coupled at one end thereof to the substrate at a second substrate cold junction; and

a plurality of thermocouples disposed over the first and second beams and the infrared absorbing membrane; wherein

the plurality of thermocouples is arranged on the first and second beams and the infrared absorbing membrane as a first thermopile and a second thermopile;

the first and second thermopiles are arranged on the infrared absorbing membrane to measure, when in use, a sum of first temperature differentials and second temperature differentials, the first temperature differentials being between the first substrate cold junction and a hot junction on the infrared absorbing membrane, and the second temperature differentials being between the second substrate cold junction and the hot junction on the infrared absorbing membrane; and

the first thermopile is configured to connect selectively to the second thermopile in series and anti-series.

2. A device as claimed in Claim 1, wherein the infrared absorbing membrane comprises hot junctions of the plurality of thermocouples.

3. A device as claimed in Claim 1 or Claim 2, wherein each of the first thermopile and the second thermopile is respectively configured to measure, when in use, a summation of temperature differentials in respect of a first region of the infrared absorbing membrane and a second region of the infrared absorbing membrane.

4. A device as claimed in Claim 2, wherein

a number of the hot junctions and a number of cold junctions of the plurality of thermocouples are configured so as to provide the first thermopile between the plurality of hot junctions and the number of cold junctions;

another number of the hot junctions and another number of cold junctions of the plurality of thermocouples are configured so as to provide the second thermopile between the plurality of hot junctions and the another number of cold junctions;

at least one of the number of cold junctions is located at a first end of the first beam distal from the infrared absorbing membrane; and

at least one of the another number of cold junctions is located at a second end of the second beam distal from the infrared absorbing membrane.

5. A method as claimed in Claim 4, wherein the summation of the first and second temperature differentials is measured between the number of cold junctions and the number of hot junctions.

6. A device as claimed in any one of the preceding claims, wherein at least a portion of each of the hot junctions is configured to converge within a predetermined hot end region of the infrared absorbing membrane.

7. A device as claimed in any one of the preceding claims, wherein

the first beam comprises a narrow track portion that extends towards the infrared absorbing membrane and integrally forms a portion of the infrared absorbing membrane; and

the second beam comprises a narrow track portion that extends towards the infrared absorbing membrane and integrally forms another portion of the infrared absorbing membrane.

8. A device as claimed in any one of the preceding claims, wherein neighbouring thermocouples of the first thermopile are separated by a number of separating channels narrower than the thermocouples.

9. A device as claimed in any one of the preceding claims, wherein the plurality of thermocouples is an even number of thermocouples.

10. A device as claimed in any one of the preceding claims, wherein

the first beam bridges the substrate and a first side of the infrared absorbing membrane; and

the second beam bridges the substrate and a second side of the infrared absorbing membrane.

11. A device as claimed in Claim 4 or Claim 5, wherein a first number of thermocouples of the first thermopile between the hot junction on the infrared absorbing membrane and the at least one of the number of cold junctions of the first beam is greater than a second number of thermocouples of the first thermopile between the hot junction on infrared absorbing membrane and the at least one of the another number of cold junctions of the second beam.

12. A device as claimed in any one of the preceding claims, wherein a first number of thermocouples of the second thermopile between the hot junction on the infrared absorbing membrane and the at least one of the another number of cold junctions of the second beam is greater than a second number of thermocouples of the second thermopile between the hot junction on the infrared absorbing membrane and the at least one of the number of cold junctions of the first beam.

13. A thermal sensor array device comprising the thermal sensor element device as claimed in any one of the preceding claims.

14. A method of measuring a temperature gradient over a thermal sensor device of an array of thermal sensor devices, the method comprising:

   providing an array of thermal sensor devices comprising the thermal sensor device as claimed in any one of Claims 1 to 12;
   receiving infrared electromagnetic radiation incident upon the thermal sensor device;
   connecting the first thermopile to the second thermopile in anti-series;
   measuring a difference value in respect of the received infrared electromagnetic radiation constituting the temperature gradient; and
   storing the temperature gradient measured.

15. A method of measuring a temperature, the method comprising:

   measuring the temperature gradient as claimed in Claim 14;
   connecting the first thermopile to the second thermopile in series;
   measuring a summation value in respect of the received infrared electromagnetic radiation; and
   calculating a temperature by using the temperature gradient to compensate the summation value.

**FIG. 1**

*FIG. 2*

FIG. 3

START

Provide array of thermal sensor elements ~400

Power up ~402

Place in scene and secure IR radiation ~404

Connect thermopiles in anti-series ~406

Measure difference voltage for all pixels ~408

Calculate temperature gradient for all pixels ~410

Store temperature gradients calculated ~412

Place temperature gradients calculated to determine local temperature gradient in x and y directions ~414

Yes — Calculate temperature gradient again? — No → STOP

416

## FIG. 4

*FIG. 5*

EP 4 549 895 A1

FIG. 6

A-A

FIG. 7

EP 4 549 895 A1

| | Europäisches Patentamt European Patent Office Office européen des brevets | **EUROPEAN SEARCH REPORT** | Application Number EP 23 20 6905 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/003172 A1 (MAES BEN [BE] ET AL) 5 January 2017 (2017-01-05) | 1-3, 6-10, 13-15 | INV. G01J5/02 G01J5/12 |
| Y | * figures 2,4,9 * * paragraphs [0001], [0008], [0053], | 1-3,6-9, 13,14 | G01J1/02 |
| A | [0058], [0084], [0085], [0088], [0100] – [0107] * ----- | 4,5,11, 12 | |
| Y | EP 2 447 705 A1 (PANASONIC CORP [JP]) 2 May 2012 (2012-05-02) | 1-3,6-9, 13,14 | |
| A | * figures 27,28 * * paragraphs [0001], [0102] – [0104] * ----- | 4,5, 10-12,15 | |
| A,D | DE 10 2004 027393 A1 (BRAUN GMBH [DE]) 22 December 2005 (2005-12-22) * figures 1-16 * * paragraphs [0043] – [0056] * ----- | 1-15 | |
| A | CN 115 241 362 A (SHANGHAI YEYING MICROELECTRONICS TECH CO LTD) 25 October 2022 (2022-10-25) * abstract; figures 7-10 * * paragraph [0069] – paragraph [0089] * ----- | 1-15 | TECHNICAL FIELDS SEARCHED (IPC) G01J |
| A | US 4 772 790 A (ALDRIDGE ROLAND H [US]) 20 September 1988 (1988-09-20) * figures 3,3A * * column 4, line 13 – column 6, line 62 * ----- | 1-15 | |

The present search report has been drawn up for all claims

| Place of search | Date of completion of the search | Examiner |
|---|---|---|
| Munich | 11 April 2024 | Gangl, Martin |

EPO FORM 1503 03.82 (P04C01)

## ANNEX TO THE EUROPEAN SEARCH REPORT
## ON EUROPEAN PATENT APPLICATION NO.

EP 23 20 6905

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2024

| Patent document cited in search report | | | Publication date | Patent family member(s) | | | Publication date |
|---|---|---|---|---|---|---|---|
| US 2017003172 | A1 | | 05-01-2017 | EP | 3084375 | A1 | 26-10-2016 |
| | | | | GB | 2521475 | A | 24-06-2015 |
| | | | | US | 2017003172 | A1 | 05-01-2017 |
| | | | | WO | 2015091297 | A1 | 25-06-2015 |
| EP 2447705 | A1 | | 02-05-2012 | CN | 102575983 | A | 11-07-2012 |
| | | | | EP | 2447705 | A1 | 02-05-2012 |
| | | | | KR | 20120071381 | A | 02-07-2012 |
| | | | | TW | 201129790 | A | 01-09-2011 |
| | | | | US | 2012235038 | A1 | 20-09-2012 |
| | | | | WO | 2010150787 | A1 | 29-12-2010 |
| DE 102004027393 | A1 | | 22-12-2005 | NONE | | | |
| CN 115241362 | A | | 25-10-2022 | CN | 115241362 | A | 25-10-2022 |
| | | | | WO | 2024031992 | A1 | 15-02-2024 |
| US 4772790 | A | | 20-09-1988 | BR | 8606475 | A | 20-10-1987 |
| | | | | DE | 3738179 | A1 | 24-05-1989 |
| | | | | FR | 2623287 | A1 | 19-05-1989 |
| | | | | GB | 2211929 | A | 12-07-1989 |
| | | | | US | 4772790 | A | 20-09-1988 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3118594 B1

- DE 102004027393 A1